(19) Europäisches Patentamt
European Patent Office
Office européen des brevets

(11) **EP 4 015 244 B1**

(12) **EUROPEAN PATENT SPECIFICATION**

(45) Date of publication and mention
of the grant of the patent:
**06.12.2023 Bulletin 2023/49**

(21) Application number: **21203439.1**

(22) Date of filing: **19.10.2021**

(51) International Patent Classification (IPC):
***B60C 11/00*** *(2006.01)*        ***B60C 11/03*** *(2006.01)*

(52) Cooperative Patent Classification (CPC):
**B60C 11/0332; B60C 11/0083;** B60C 2011/0355

(54) **TIRE**

**REIFEN**

**PNEUMATIQUE**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **17.12.2020 JP 2020209584**

(43) Date of publication of application:
**22.06.2022 Bulletin 2022/25**

(73) Proprietor: **SUMITOMO RUBBER INDUSTRIES
LIMITED
Kobe-shi
Hyogo-ken (JP)**

(72) Inventors:
• **YAMAOKA, Hiroshi
Kobe-shi, 651-0072 (JP)**

• **INADA, Yutaro
Kobe-shi, 651-0072 (JP)**

(74) Representative: **Manitz Finsterwald
Patent- und Rechtsanwaltspartnerschaft mbB
Martin-Greif-Strasse 1
80336 München (DE)**

(56) References cited:
**EP-A1- 2 527 163          EP-A1- 3 173 254
EP-A1- 3 689 642          JP-A- 2009 078 790
US-A1- 2014 196 826    US-A1- 2016 297 254
US-B1- 6 443 199**

## Description

### FIELD OF THE INVENTION

The present invention relates to a tire having a tread portion.

BACKGROUND OF THE INVENTION

Conventionally, a tire having a tread portion provided with circumferential grooves extending in the tire circumferential direction has been known.

For example, Patent Document 1 below discloses a tire improved in wear resistance by specifically defining the profile of a tread portion in which a plurality of main grooves extending in the tire circumferential direction are formed. Patent Document 1: Japanese Patent Application Publication No. 2019-182339

A tire in accordance with the preamble of claim 1 is known from US 6 443 199 B1 and JP 2009 078790 A. Related tires are known from EP 3 173 254 A1, EP 2 527 163 A1 and EP 3 689 642 A1.

### SUMMARY OF THE INVENTION

### PROBLEMS TO BE SOLVED BY THE INVENTION

In the tire of Patent Document 1, since the groove depths of the main grooves are the same and relatively large, the rigidity of the tread portion is reduced by the main grooves, therefore, the tire is required to be improved in the rigidity of the tread portion in view of the steering stability performance.

In view of the above circumstances, the present invention was made, and a main object of the present invention is to provide a tire in which steering stability performance can be improved, while maintaining excellent wear resistance performance.

### MEANS FOR SOLVING THE PROBLEMS

The object is solved by a tire having the features of claim 1. Sub-claims are directed to preferable embodiments of the invention.

### EFFECTS OF THE INVENTION

In the tire according to the present invention, as the crown ground contact length is 0.95 to 1.05 times the shoulder ground contact length, the tire has a large ground contact area and can improve cornering power, therefore, it is possible to improve steering stability performance.

Further, as the groove depth d of each grooves is determined so as to satisfy the above equation (1), the groove depth can be prevented from becoming excessively large for the amount of wear which is different depending on the axial position. As a result, the rigidity of the tread portion is improved, and the cornering power can be improved. Therefore, the tire of the present invention can be improved in steering stability performance while maintaining excellent wear resistance performance.

### BRIEF DESCRIPTION OF THE DRAWINGS

FIG. 1 is a cross-sectional view of a tread portion of a tire as an embodiment of the present invention.
FIG. 2 is a diagram showing a ground contact area or footprint of the tire.
FIG. 3 is a cross-sectional view of a tread portion of a tire as another embodiment of the present invention.
FIG. 4 is a flowchart showing a method of setting a groove depth as an embodiment of the present invention.

### DETAILED DESCRIPTION OF THE INVENTION

The present invention can be applied to various tires such as a pneumatic tire for passenger cars, a pneumatic tire for heavy load vehicles, a pneumatic tire for two-wheeled vehicles, a non-pneumatic tire so called airless tire and the like. In particular, the present invention is suitably applied to a pneumatic tire for passenger cars.

Taking a pneumatic tire for passenger cars as an example, an embodiment of the present invention will now be described in detail in conjunction with accompanying drawings.

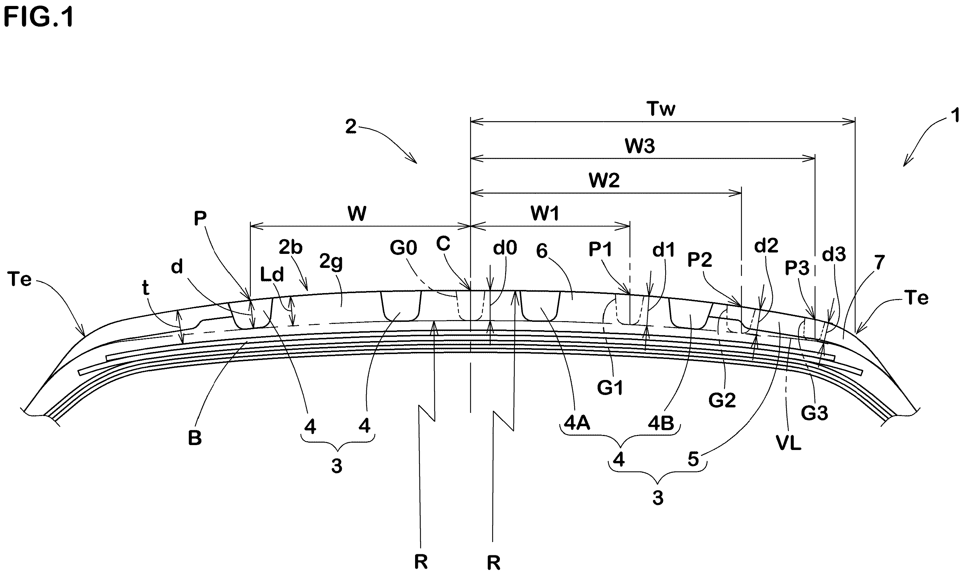

FIG. 1 is a tire meridian cross-sectional view of a tread portion 2 of a tire 1 as an embodiment under its normal state.

Here, when the tire 1 is a pneumatic tire, the "normal state" is a state of the tire 1 which is mounted on a normal rim and inflated to a normal internal pressure but load with no tire load.

In the present specification, the dimensions and the like of portions of the tire 1 are values measured in the normal state unless otherwise noted.

The "normal rim" is a wheel rim specified for the tire by a standard included in a standardization system on which the tire is based, for example, the "normal wheel rim" in JATMA, "Design Rim" in TRA, and "Measuring Rim" in ETRTO. If there is no standardization system including standards on which the tire 1 is to be based, the "normal rim" is a wheel rim specified by the tire manufacturer or the like.

The "normal inner pressure" is air pressure specified for the tire by a standard included in a standardization system on which the tire is based, for example, the "maximum air pressure" in JATMA, maximum value listed in the "TIRE LOAD LIMITS AT VARIOUS COLD INFLATION PRESSURES" table in TRA, and "INFLATION PRESSURE" in ETRTO. If there is no standardization system including standards on which the tire 1 is to be based, the "normal inner pressure" is air pressure specified by the tire manufacturer or the like.

As shown in FIG. 1, the tire 1 of the present embodiment has a tread portion 2 contacting with the ground during running. The tread portion 2 in the present embodiment is provided with grooves 3.In the present embodiment, the grooves 3 include a plurality of circumferential grooves 4, in this example, four circumferential grooves 4, each extending in the tire circumferential direction, and a plurality of lateral grooves 5 extending in the tire axial direction.

The circumferential grooves 4 in this example include a shoulder circumferential groove 4B, and a crown circumferential groove 4A disposed on the tire equator C side of the shoulder circumferential groove 4B.

the tire 1 has good drainage property when running on wet road surfaces due to such grooves 3.

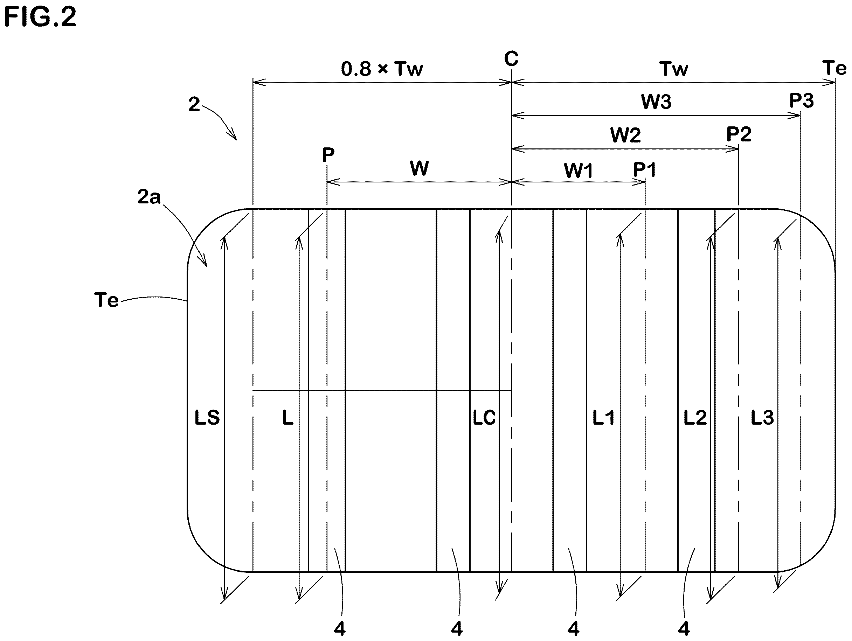

FIG. 2 is a schematic view showing a ground contact area 2a of the tread portion 2.

As shown in FIG. 2, in the tread portion 2 of the present embodiment, when the tire under the normal state is contacted with a horizontal flat plane at a camber angle of 0 degree and loaded with a normal load,

the ground contact area 2a has ground contact lengths L in the tire circumferential direction associated with respective positions P in the tire axial direction.

The ground contact area 2a of the present embodiment has a half tread width Tw which is a distance from the tire equator C to a tread edge Te which is an outermost end of the ground contact area 2a in the tire axial direction.

The tire equator C is the center position in the tire axial direction between the tread edges Te on both sides.

Here, the "normal load" is a load specified for the tire by a standard included in a standardization system on which the tire is based, for example, the "maximum load capacity" in JATMA, maximum value listed in "TIRE LOAD LIMITS AT VARIOUS COLD INFLATION PRESSURES" table in TRA, and "LOAD CAPACITY" in ETRTO. If there is no standardization system including standards on which the tire 1 is to be based, the "normal load" is a load specified by the tire manufacturer or the like.

The ground contact lengths L include a crown ground contact length LC at the tire equator C, and a shoulder ground contact length LS at an axial position P1 spaced apart from the tire equator C by a distance w1 of 80% of the half tread width Tw. In the present embodiment, the crown ground contact length LC is in a range from 0.95 to 1.05 times the shoulder ground contact length LS.

Since such tire 1 has a large ground contact area and can improve cornering power, it is possible to improve steering stability performance.

Based on a groove depth d0 predetermined for a reference virtual groove G0 defined at the axial position of the tire equator C as shown in FIGS. 1 and 2,

the depth d of each of the grooves 3 at an axial position is determined so as to satisfy the following equation (1):

$$d =< (L \times d0 \times 1.1)/\{L + \alpha(LC-L)\} \quad --- \quad (1)$$

wherein

> L is the ground contact length of the ground contact area 2a measured at the above-said axial position,
> LC is the crown ground contact length at the tire equator C, and
> $\alpha$: a correction coefficient.

In such groove 3, the groove depth d can be prevented from becoming excessively large for the amount of wear which is different depending on the axial positions, and the rigidity of the tread portion 2 is improved to improve the cornering power. Therefore, the tire 1 of the present embodiment can be improved in steering stability performance while maintaining the excellent wear resistance performance.

Preferably, the groove depth d0 of the reference virtual groove G0 is determined based on the groove depth d of the actual circumferential groove 4 disposed adjacently to the tire equator C. For example, by determining a curve line which extends with the same radius of curvature R as the radially outer surface 2b of the tread portion at the tire equator C while contacting with the groove bottoms of the crown circumferential grooves 4A disposed on both sides of the tire equator C adjacently thereto,

the groove depth d0 of the reference virtual groove G0 is defined as the radial distance between the curve line and the radially outer surface 2b at the tire equator C.

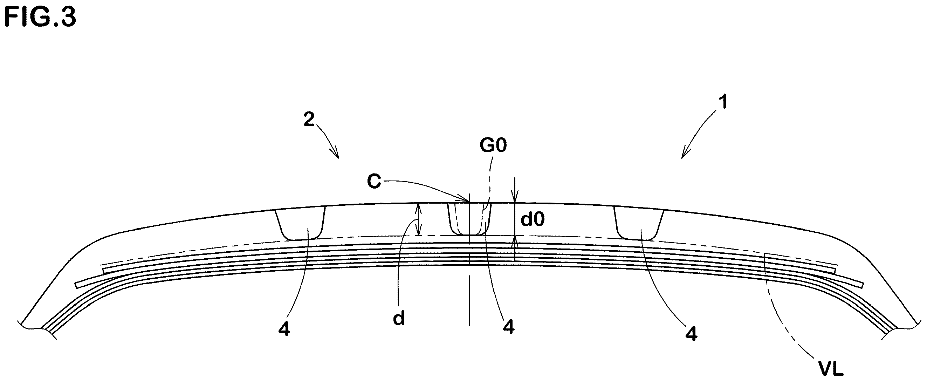

FIG. 3 shows a meridian cross section of the tread portion 2 of the tire 1 as another embodiment under the normal state.

As shown in FIG. 3, the tread portion 2 of the present embodiment is provided with three circumferential grooves 4.

One of the three circumferential grooves 4 is disposed on the tire equator C.

The groove depth d0 of the reference virtual groove G0 of the present embodiment is defined as the groove depth d of the circumferential groove 4 arranged on the tire equator C.

The definition of the groove depth d0 of such reference virtual groove G0 is simple and clear.

The number of the circumferential grooves 4 may be, for example, two or five or more.

The groove depths d of the circumferential grooves 4 are preferably defined based on a virtual line VL defined in the tire meridian cross section under the normal state with no tire load as shown in FIGS. 1 and 2.

The virtual line VL of the present embodiment is defined based on the reference virtual groove G0, a first virtual groove G1, a second virtual groove G2, and a third virtual groove G3 defined in the tread portion 2 in the tire meridian cross section under the normal state with no tire load.

The reference virtual groove G0 is a virtual circumferential groove defined at the tire equator C.

The first virtual groove G1 is a virtual circumferential groove defined at a first axial position P1 spaced apart from the tire equator C in the tire axial direction.

The second virtual groove G2 is a virtual circumferential groove defined at a second axial position P2 axially outside the first axial position P1.

The third virtual groove G3 is a virtual circumferential groove defined at a third axial position P3 axially outside the second axial position P2.

such virtual line VL can optimize the groove depth d of each circumferential groove 4 for the amount of wear, and can improve the rigidity of the tread portion 2, thereby, it is possible to improve the steering stability performance of the tire 1.

Further, the virtual line VL helps to reduce the thickness t of the tread rubber 2g of the tread portion 2 to reduce the weight of the tire 1, thereby, it is possible to improve the low-fuel consumption performance of the tire 1.

Here, the thickness t of the tread rubber 2g is the distance between the radially outer surface 2b of the tread portion 2 and a tread reinforcing layer (belt) B disposed in the tread portion 2.

The ground contact lengths L include a first ground contact length L1 at the first axial position P1, a second ground contact length L2 at the second axial position P2, and a third ground contact length L3 at the third axial position P3.

Such first ground contact length L1, second ground contact length L2, and third ground contact length L3 are useful for accurately defining the virtual line VL.

The groove depth d1 of the first virtual groove G1 is preferably determined by the following equation (2):

$$\mathtt{d1\ =\ (L1\ x\ d0)/\{L1\ +\ \alpha(LC-L1)\}\ ---\ (2)}$$

wherein

    d0 is the groove depth of the reference virtual groove,
    LC is the crown ground contact length,
    L1 is the first ground contact length, and
    α is the correction coefficient.

The groove depth d2 of the second virtual groove G2 is preferably determined by the following equation (3):

$$\mathtt{d2\ =\ (L2\ x\ d0)/\{L2\ +\ \alpha(LC-L2)\}\ ---\ (3)}$$

   wherein

d0 is the groove depth of the reference virtual groove,
LC is the crown ground contact length,
L2 is the second ground contact length, and
$\alpha$ is the correction coefficient.

The groove depth d3 of the third virtual groove G3 is preferably determined by the following equation (4):

$$d3 = (L3 \times d0)/\{L3 + \alpha(LC-L3)\} \quad --- \quad (4)$$

wherein

d0 is the groove depth of the reference virtual groove,
LC is the crown ground contact length,
L3 is the third ground contact length, and
$\alpha$ is the correction coefficient.

The correction coefficient $\alpha$ is preferably a positive number of 2.0 or less.

As the correction coefficient $\alpha$ is 2.0 or less, it is possible to suppress excessive correction caused by the differences of the first ground contact length L1, the second ground contact length L2, and the third ground contact length L3 from the crown ground contact length LC.

As the correction coefficient $\alpha$ is a positive number, it is possible to reliably correct based on the differences of the first ground contact length L1, the second ground contact length L2, and the third ground contact length L3 from the crown ground contact length LC.

More preferably, the correction coefficient $\alpha$ is 0.8 to 1.2.

The virtual line VL of the present invention is defined so as to contact with the groove bottom of the reference virtual groove G0, the groove bottom of the first virtual groove G1, the groove bottom of the second virtual groove G2, and the groove bottom of the third virtual groove G3.

The groove depth d of each circumferential groove 4 of the present invention is in a range from 90% to 110% of the distance Ld from the radially outer surface 2b of the tread portion 2 to the virtual line VL measured at the axial position P at which the circumferential groove 4 is formed.

Such circumferential groove 4 is prevented from having an excessively large groove depth d for the amount of wear which is different depending on the positions P in the tire axial direction, and thereby the rigidity of the tread portion 2 is improved. Therefore, the tire 1 of the present invention can be improved in steering stability performance while maintaining the excellent wear resistance performance.

The first axial position P1 is spaced apart from the tire equator C at an axial distance W1 of from 40% to 55% of the half tread width Tw.

The first axial position P1 in this example is located in a middle land portion 6 defined between the crown circumferential groove 4A and the shoulder circumferential groove 4B.

The second axial position P2 is spaced apart from the tire equator C by an axial distance W2 of from 75% to 80% of the half tread width Tw.

The second axial position P2 in this example is located in a shoulder land portion 7 defined as extending axially outwardly from the shoulder circumferential groove 4B.

When the axial distance W2 is 80% of the half tread width Tw, the second ground contact length L2 is equal to the shoulder ground contact length LS.

The third axial position P3 is spaced apart from the tire equator C by a distance W3 of from 90% to 85% of the half tread width Tw.

The third axial position P3 in this example is located in the shoulder land portion 7 axially outside the shoulder circumferential groove 4B.

By the reference virtual groove G0, the first virtual groove G1, the second virtual groove G2, and the third virtual groove G3, the virtual line VL can be accurately defined over the entire range from the tire equator C to the tread edge Te.

The circumferential grooves 4 in the present embodiment include an axially inner first circumferential groove, and an axially outer second circumferential groove.

The first circumferential groove is, for example, the crown circumferential groove 4A. The second circumferential groove is, for example, the shoulder circumferential groove 4B.

In the present invention, the groove depth of the second circumferential groove is larger than the groove depth of the first circumferential groove.

In such circumferential grooves 4, when the tread portion 2 is worn, the remaining groove depths become almost equal. As a result, it is possible to achieve the durability performance as well as the low-fuel consumption performance owing to weight reduction.

In the present embodiment, the groove depth d of the lateral groove 5 at an axial position P is equal to or less than the distance Ld from the radially outer surface 2b to the virtual line VL at the axial position P. The virtual line VL can optimize the maximum value for the groove depth d of the lateral groove 5. The groove bottom of the lateral groove 5 may extend along the virtual line VL.

Next, for the tire 1 whose tread portion is provided with a plurality of circumferential grooves 4 extending in the tire circumferential direction, a method of setting the groove depth d of the circumferential groove 4 is described with reference to FIGS. 1 to 3.

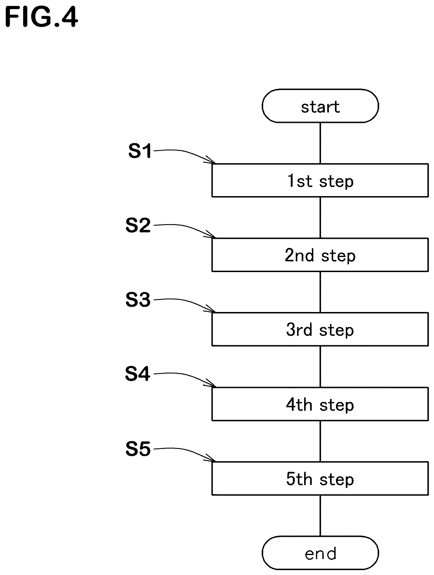

FIG. 4 is a flowchart of the groove depth setting method according to the present embodiment.

In this method, as shown in FIG. 4, a first step S1 of determining the ground contact area 2a of the tread portion 2 when the tire 1 under the normal state is contacted with a horizontal flat plane at a camber angle of 0 degree and loaded with a normal load, is performed.

In the first step S1, the ground contact area 2a may be determined through a simulation using a computer, or an experiment.

In the first step S1, the shape of the ground contact area 2a is obtained accurately.

In the groove depth setting method of the present embodiment, after the first step 51, there is performed a second step S2 of obtaining the ground contact length L in the tire circumferential direction of the ground contact area 2a associated with each position P in the tire axial direction of the ground contact area 2a.

In the second step S2 of the present embodiment, at least the crown ground contact length LC and the shoulder ground contact length LS are obtained.

In the second step S2, it is desirable that the first ground contact length L1, the second ground contact length L2, and the third ground contact length L3 are obtained.

In the second step S2, it is not necessary to obtain the ground contact length L associated with all positions P in the tire axial direction to shorten the calculation time.

In the groove depth setting method of the present embodiment, after the second step S2, performed is a third step S3 of defining the reference virtual groove G0, the first virtual groove G1, the second virtual groove G2, and the third virtual groove G3.

In this example, the third step S3 defines the groove depth d0 of the reference virtual groove G0, the groove depth d1 of the first virtual groove G1, the groove depth d2 of the second virtual groove G2, and the groove depth d3 of the third virtual groove G3.

In the groove depth setting method of the present embodiment, after the third step S3, there is performed a fourth step S4 of defining the virtual line VL by a tangential line contacting with the groove bottom of the reference virtual groove G0, the groove bottom of the first virtual groove G1, the groove bottom of the second virtual groove G2, and the groove bottom of the third virtual groove G3.

In the groove depth setting method of the present embodiment, after the fourth step S4, there is performed a fifth step S5 of determining the groove depth d of each circumferential groove 4 so that the groove bottom is located on the virtual line VL.

In such groove depth setting method, the groove depth d of the circumferential groove 4 can be optimized for the amount of wear which is different depending on the axial positions, and thereby the rigidity of the tread portion 2 can be improved. Therefore, the groove depth setting method can improve the steering stability performance while maintaining the excellent wear resistance performance of the tire 1.

In the groove depth setting method, for example, it may be possible to define the virtual line VL by using virtual circles defined so as to have respective centers on the radially outer surface 2b of the tread portion 2, instead of the virtual grooves.

While detailed description has been made of preferable embodiments of the present invention, the present invention can be embodied in various forms within the scope of the appended claims.

**Comparison tests**

Based on the structure shown in FIG. 1, pneumatic tires having circumferential grooves were experimentally manufactured as test tires including working examples and comparative example. In the working examples, the groove depths of the circumferential grooves were determined based on the equations (2) to 4).

In the comparative example, the circumferential grooves had the same groove depth.

The specifications are shown in Table 1.

The tires were tested for the wear resistance performance, steering stability performance, noise performance and low-fuel consumption performance.

The common specifications of the test tires and test methods are as follows.

< Common specifications >

Tire size: 255/65R18
Rim size: 18x7.5J

< Wear resistance performance test >

Each test tire was attached to all wheels of a test vehicle, and after the vehicle had run for 20000 km on a dry paved road surface, tread wear was measured at different axial positions to obtain the amount of wear at the axial position where the wear was most progressed.

The obtained results are indicated in Table 1 by an index based on Comparative Example being 100, wherein the larger the value, the less the wear progresses, namely, the better the wear resistance performance.

< Steering stability performance test >

Using a flat belt tester, the cornering power of each test tire was measured when the tire mounted on a normal rim, inflated to a normal internal pressure and load with a normal tire load was running on the belt with a slip angle of 1 degree at a speed of 30 km/h.

The results are indicated in Table 1 by an index based on Comparative Example being 100, wherein the larger the value, the larger the cornering power, namely, the better the steering stability performance.

< Noise performance test >

Each test tire was attached to all wheels of a test vehicle, and the pass-by noise was measured outside the test vehicle when running on a noise measuring road surface of a tire test course.

The results are indicated in Table 1 by an index based on Comparative Example being 100, wherein the larger the value, the smaller the noise, namely, the better the noise performance.

< Low-fuel consumption performance test >

The weight of each test tire was measured.

The results are indicated in Table 1 by an index based on Comparative Example being 100, wherein the larger the value, the lighter the weight, namely, the better the low-fuel consumption performance.

Table 1

| tire | comparative example | working example 1 | working example 2 | working example 3 |
|---|---|---|---|---|
| Correction coefficient $\alpha$ | -- | 0.1 | 1.0 | 2.0 |
| Wear resistance performance | 100 | 100 | 100 | 100 |
| Steering stability performance | 100 | 103 | 105 | 103 |
| Noise performance | 100 | 103 | 105 | 103 |
| Low-fuel consumption performance | 100 | 103 | 105 | 103 |

Form the test results, it was confirmed that, as compared with the comparative example, the tires according to the present invention were improved in steering stability performance while maintaining comparable wear resistance performance, and exhibited excellent noise performance and low-fuel consumption performance.

**DESCRIPTION OF THE REFERENCE SIGNS**

1 tire
2 tread portion
2a ground contact area
3 groove
4 circumferential groove
5 lateral groove

## Claims

1. A tire (1) comprising a tread portion (2) provided with grooves (3, 4),
   wherein
   when the tire mounted on a normal rim and inflated to a normal internal pressure is contacted with a horizontal flat surface at a camber angle of 0 degree and loaded with a normal load,

   the tread portion (2) has a ground contact area (2a) having ground contact lengths (L) in the tire circumferential direction associated with respective positions in the tire axial direction, and
   a half tread width (Tw) which is a distance from the tire equator (C) to a tread edge (Te) which is the axially outermost end of the ground contact area (2a),
   the ground contact lengths (L) include
   a crown ground contact length LC at the tire equator (C), and
   a shoulder ground contact length (LS) at a position spaced apart from the tire equator (C) by an axial distance of 80% of the half tread width (Tw),
   wherein

   the crown ground contact length LC is 0.95 to 1.05 times the shoulder ground contact length (LS),
   **characterized in that**
   in a meridian cross section of the tire mounted on the normal rim, inflated to the normal internal pressure and loaded with no tire load,
   given a groove depth d0 for a reference virtual groove (G0) defined at the axial position of the tire equator (C),
   a groove depth d of each of the grooves at an axial position satisfies the following equation (1);

$$d =< (L \times d0 \times 1.1)/\{L + \alpha(LC-L)\} \text{ --- } (1)$$

   wherein
   d0 is determined based on the groove depth of an circumferential groove (4) disposed adjacently to the tire equator (C), with the groove depth d0 being defined as the radial distance between a curve line and a radially outer surface (2b) of the tread portion (2) at the tire equator (C), wherein the curve line extends with a same radius of curvature (R) as a radially outer surface (2b) of the tread portion (2) at the tire equator (C) while contacting with a groove bottom of said circumferential groove (4),LC is the crown ground contact length at the tire equator (C),
   L is the ground contact length of the ground contact area measured at said axial position when the tire mounted on a normal rim and inflated to a normal internal pressure is contacted with a horizontal flat surface at a camber angle of 0 degree and loaded with a normal load,
   $\alpha$: a correction coefficient, wherein the correction coefficient $\alpha$ is a positive number of 2.0 or less,

   and the grooves include circumferential grooves (4) extending in the tire circumferential direction, wherein the circumferential grooves (4) include an axially inner first circumferential groove and an axially outer second circumferential groove, wherein the groove depth of the second circumferential groove is larger than the groove depth of the first circumferential groove,
   and wherein, in a meridian cross section of the tire mounted on the normal rim, inflated to the normal internal pressure and loaded with no tire load,

   when

   the reference virtual groove (G0) is defined,
   a first virtual groove (G1) is defined at a first axial position (P1) spaced apart from the tire equator in the tire axial direction,
a second virtual groove (G2) is defined at a second axial position (P2) axially outside the first axial position,
a third virtual groove (G3) is defined at a third axial position (P3) axially outside the second axial position,
wherein the first axial position (P1) is spaced apart from the tire equator (C) by an axial distance (W1) of
from 40% to 55% of the half tread width (Tw), the second axial position (P2) is spaced apart from the tire
equator (C) by an axial distance (W2) of from 75% to 80% of the half tread width (Tw), and the third axial
position (P3) is spaced apart from the tire equator (C) by an axial distance (W3) of from 90% to 85% of the
half tread width (Tw), and
a virtual line (VL) is defined so as to contact with a groove bottom of the reference virtual groove (G0), a
groove bottom of the first virtual groove (G1), a groove bottom of the second virtual groove (G2), and a
groove bottom of the third virtual groove (G3),

then
the groove depth of each circumferential groove is in a range from 90% to 110% of the distance (Ld) from the
radially outer surface of the tread portion (2b) to the virtual line (VL) at the axial position of said each circumferential
groove,
wherein

the groove depth d1 of the first virtual groove (G1),
the groove depth d2 of the second virtual groove (G2), and
the groove depth d3 of the third virtual groove (G3) are determined based on the following equations (2) to (4):

$$d1 = (L1 \times d0)/\{L1 + \alpha(LC-L1)\} \text{ --- } (2)$$

$$d2 = (L2 \times d0)/\{L2 + \alpha(LC-L2)\} \text{ --- } (3)$$

$$d3 = (L3 \times d0)/\{L3 + \alpha(LC-L3)\} \text{ --- } (4)$$

wherein
d0 is the groove depth of the reference virtual groove (G0),
LC is the crown ground contact length,
L1 is a first ground contact length at the first axial position (P1),
L2 is a second ground contact length at the second axial position (P2), and
L3 is a third ground contact length at the third axial position (P3), wherein the ground contact lengths LC, L1,
L2 and L3 are measured when the tire mounted on a normal rim and inflated to a normal internal pressure is
contacted with a horizontal flat surface at a camber angle of 0 degree and loaded with a normal load.

2. The tire (1) according to claim 1, wherein
the correction coefficient $\alpha$ is in a range from 0.8 to 1.2.

3. The tire (1) according to claim 1 or 2, wherein
the grooves include lateral grooves (5) extending in the tire axial direction.


**Patentansprüche**

1. Reifen (1), der einen Laufflächenabschnitt (2) umfasst, der mit Rillen (3, 4) versehen ist,
wobei,
wenn der auf eine normale Felge aufgezogene und auf einen normalen Innendruck aufgepumpte Reifen mit einer
horizontalen ebenen Fläche mit einem Sturzwinkel von 0 Grad in Berührung kommt und mit einer normalen Last
belastet ist,

der Laufflächenabschnitt (2) eine Bodenkontaktfläche (2a) mit Bodenkontaktlängen (L) in der Reifenumfangsrichtung aufweist, die jeweiligen Positionen in der Reifenaxialrichtung zugeordnet sind,
und

eine halbe Lauffflächenbreite (Tw), die ein Abstand vom Reifenäquator (C) zu einer Laufflächenkante (Te) ist, die das axial äußerste Ende der Bodenaufstandsfläche (2a) ist,
die Bodenkontaktlängen (L) umfassen
eine Kronenbodenkontaktlänge LC am Reifenäquator (C), und
eine Schulterbodenkontaktlänge (LS) an einer Position, die von dem Reifenäquator (C) einen axialen Abstand von 80 % der halben Lauffflächenbreite (Tw) beabstandet ist,
wobei

die Kronenbodenkontaktlänge LC das 0,95- bis 1,05-fache der Schulterbodenkontaktfläche (LS) beträgt,
**dadurch gekennzeichnet, dass**
in einem Meridianquerschnitt des auf die normale Felge aufgezogenen, auf den normalen Innendruck aufgepumpten und mit keiner Reifenlast belasteten Reifens,
bei einer gegebenen Rillentiefe d0 für eine virtuelle Bezugsrille (G0), die an der axialen Position des Reifenäquators (C) definiert ist,
eine Rillentiefe d von jeder der Rillen an einer axialen Position die folgende Gleichung (1) erfüllt;

$$d =< (L \times d0 \times 1,1)/\{L + \alpha(LC-L)\} \text{ --- (1)}$$

wobei
d0 auf der Grundlage der Rillentiefe einer Umfangsrille (4) bestimmt wird, die benachbart zu dem Reifenäquator (C) angeordnet ist, wobei die Rillentiefe d0 als der radiale Abstand zwischen einer Kurvenlinie und einer radial äußeren Oberfläche (2b) des Lauffflächenabschnitts (2) am Reifenäquator (C) definiert ist, wobei sich die Kurvenlinie mit dem gleichen Krümmungsradius (R) wie eine radial äußere Oberfläche (2b) des Lauffflächenabschnitts (2) am Reifenäquator (C) erstreckt, während sie mit einem Rillengrund der Umfangsrille (4) in Kontakt steht, LC die Kronenbodenkontaktlänge an dem Reifenäquator (C) ist,
L die Bodenkontaktlänge der Bodenkontaktfläche ist, die an der axialen Position gemessen ist, wenn der auf eine normale Felge aufgezogene und auf einen normalen Innendruck aufgepumpte Reifen mit einer horizontalen ebenen Fläche mit einem Sturzwinkel von 0 Grad in Kontakt kommt und mit einer normalen Last belastet ist,
$\alpha$: ein Korrekturkoeffizient, wobei der Korrekturkoeffizient $\alpha$ eine positive Zahl von 2,0 oder kleiner ist,

und die Rillen Umfangsrillen (4) umfassen, die sich in der Reifenumfangsrichtung erstrecken, wobei die Umfangsrillen (4) eine axial innere erste Umfangsrille und eine axial äußere zweite Umfangsrille umfassen, wobei die Rillentiefe der zweiten Umfangsrille größer ist als die Rillentiefe der ersten Umfangsrille,
und wobei in einem Meridian-Querschnitt des auf die normale Felge aufgezogenen Reifens, der auf den normalen Innendruck aufgepumpt und mit keiner Reifenlast belastet ist,
wenn
die virtuelle Bezugsrille (G0) definiert ist,
eine erste virtuelle Rille (G1) an einer ersten axialen Position (P1) definiert ist, die vom Reifenäquator in der Reifenaxialrichtung beabstandet ist,
eine zweite virtuelle Rille (G2) an einer zweiten axialen Position (P2) axial außen von der ersten axialen Position definiert ist,
eine dritte virtuelle Rille (G3) an einer dritten axialen Position (P3) axial außen von der zweiten axialen Position definiert ist, wobei die erste axiale Position (P1) von dem Reifenäquator (C) einen axialen Abstand (W1) von 40% bis 55% der halben Lauffflächenbreite (Tw) beabstandet ist, die zweite axiale Position (P2) von dem Reifenäquator (C) einen axialen Abstand (W2) von 75% bis 80% der halben Lauffflächenbreite (Tw) beabstandet ist, und die dritte axiale Position (P3) von dem Reifenäquator (C) einen axialen Abstand (W3) von 90% bis 85% der halben Lauffflächenbreite (Tw) beabstandet ist, und
eine virtuelle Linie (VL) so definiert ist, dass sie mit einem Rillengrund der virtuellen Bezugsrille (G0), einem Rillengrund der ersten virtuellen Rille (G1), einem Rillengrund der zweiten virtuellen Rille (G2) und einem Rillengrund der dritten virtuellen Rille (G3) in Kontakt steht,

dann
die Rillentiefe jeder Umfangsrille in einem Bereich von 90 % bis 110 % des Abstands (Ld) von der radial äußeren Oberfläche des Lauffflächenabschnitts (2b) zu der virtuellen Linie (VL) an der axialen Position der jeweiligen Umfangsrille liegt,
wobei

die Rillentiefe d1 der ersten virtuellen Rille (G1),
die Rillentiefe d2 der zweiten virtuellen Rille (G2), und
die Rillentiefe d3 der dritten virtuellen Rille (G3) anhand der folgenden Gleichungen (2) bis (4) bestimmt sind:

$$d1 = (L1 \times d0)/\{L1 + \alpha(LC\text{-}L1)\} \text{ --- } (2)$$

$$d2 = (L2 \times d0)/\{L2 + \alpha(LC\text{-}L2)\} \text{ --- } (3)$$

$$d3 = (L3 \times d0)/\{L3 + \alpha(LC\text{-}L3)\} \text{ --- } (4)$$

wobei
d0 die Rillentiefe der virtuellen Bezugsrille (G0) ist,
LC die Kronenbodenkontaktlänge ist,
L1 eine erste Bodenkontaktlänge an der ersten axialen Position (P1) ist,
L2 eine zweite Bodenkontaktlänge an der zweiten axialen Position (P2) ist, und
L3 eine dritte Bodenkontaktlänge an der dritten axialen Position (P3) ist, wobei die Bodenkontaktlängen LC, L1, L2 und L3 gemessen sind, wenn der auf eine normale Felge aufgezogene und auf einen normalen Innendruck aufgepumpte Reifen mit einer horizontalen flachen Oberfläche mit einem Sturzwinkel von 0 Grad in Kontakt kommt und mit einer normalen Last belastet ist.

2. Reifen (1) nach Anspruch 1, wobei der Korrekturkoeffizient $\alpha$ in einem Bereich von 0,8 bis 1,2 liegt.

3. Reifen (1) nach Anspruch 1 oder 2, wobei die Rillen Querrillen (5) umfassen, die sich in der Reifenaxialrichtung erstrecken.

**Revendications**

1. Pneumatique (1) comprenant une portion formant bande de roulement (2) dotée de rainures (3, 4), dans lequel

quand le pneumatique monté sur une jante normale et gonflé à une pression interne normale est mis en contact avec une surface plate horizontale sous un angle de cambrure de 0 degré et est chargé avec une charge normale, la portion formant bande de roulement (2) a
une aire de contact au sol (2a) qui a des longueurs de contact au sol (L) dans la direction circonférentielle du pneumatique associées à des positions respectives dans la direction axiale du pneumatique, et
une demi-largeur de bande de roulement (Tw) qui est une distance depuis l'équateur de pneumatique (C) jusqu'à un bord de bande de roulement (Te) qui est l'extrémité axialement la plus à l'extérieur de l'aire de contact au sol (2a),
les longueurs de contact au sol (L) incluent
une longueur de contact au sol de couronne LC au niveau de l'équateur de pneumatique (C), et
une longueur de contact au sol d'épaulement (LS) à position espacée de l'équateur de pneumatique (C) à raison d'une distance axiale de 80 % de la demi-largeur de bande de roulement (Tw),
dans lequel
la longueur de contact au sol de couronne LC est 0,95 à 1,05 fois la longueur de contact au sol d'épaulement (LS),
**caractérisé en ce que**
dans une section transversale méridienne du pneumatique monté sur la jante normale, gonflé à la pression interne normale et chargé avec aucune charge de pneumatique,
soit une profondeur de rainure d0 pour une rainure virtuelle de référence (G0) définie à la position axiale de l'équateur de pneumatique (C),
une profondeur de rainure d de chacune des rainures à une position axiale satisfait l'équation (1) suivante :

$$d =< (L \times d0 \times 1,1) / \{L + \alpha(LC\text{-}L)\} \text{ --- } (1)$$

où

d0 est déterminée sur la base de la profondeur de rainure d'une rainure circonférentielle (4) disposée de manière adjacente à l'équateur de pneumatique (C), la profondeur de rainure d0 étant définie à titre de distance radiale entre une ligne courbe et une surface radialement extérieure (2b) de la portion formant bande de roulement (2) au niveau de l'équateur de pneumatique (C), la ligne courbe s'étendant avec un même rayon de courbure (R) qu'une surface radialement extérieure (2b) de la portion formant bande de roulement (2) au niveau de l'équateur de pneumatique (C) tout en venant en contact un fond de rainure de ladite rainure circonférentielle (4),

LC est la longueur de contact au sol de couronne au niveau de l'équateur de pneumatique (C),

L est la longueur de contact au sol de l'aire de contact au sol mesurée à ladite position axiale quand le pneumatique monté sur une jante normale et gonflé à une pression interne normale est mis en contact avec une surface plate horizontale sous un angle de cambrure de 0 degré et est chargé avec une charge normale,

α est un coefficient de correction, le coefficient de correction α étant un nombre positif de 2,0 ou moins,

et les rainures incluent des rainures circonférentielles (4) s'étendant dans la direction circonférentielle du pneumatique, les rainures circonférentielles (4) incluant une première rainure circonférentielle axialement intérieure et une seconde rainure circonférentielle axialement extérieure, la profondeur de rainure de la seconde rainure circonférentielle étant plus grande que la profondeur de rainure de la première rainure circonférentielle,

et dans lequel, dans une section transversale méridienne du pneumatique monté sur la jante normale, gonflé à la pression normale et chargé avec aucune charge de pneumatique,

quand

la rainure virtuelle de référence (G0) est définie,

une première rainure virtuelle (G1) est définie à une première position axiale (P1) espacée par rapport à l'équateur de pneumatique dans la direction axiale du pneumatique,

une deuxième rainure virtuelle (G2) est définie à une deuxième position axiale (P2) axialement à l'extérieur de la première position axiale,

une troisième rainure virtuelle (G3) est définie à une troisième position axiale (P3) axialement à l'extérieur de la deuxième position axiale, dans lequel la première position axiale (P1) est espacée par rapport à l'équateur de pneumatique (C) à raison d'une distance axiale (W1) allant de 40 % à 55 % de la demi-largeur de bande de roulement (Tw), la deuxième position axiale (P2) est espacée par rapport à l'équateur de pneumatique (C) à raison d'une distance axiale (W2) allant de 75 % à 80 % de la demi-largeur de bande de roulement (Tw), et la troisième position axiale (P3) est espacée par rapport à l'équateur de pneumatique (C) à raison d'une distance axiale (W3) allant de 90 % à 85 % de la demi-largeur de bande de roulement (Tw), et

une ligne virtuelle (VL) est définie de manière à venir en contact avec un fond de rainure de la rainure virtuelle de référence (G0), un fond de rainure de la première rainure virtuelle (G1), un fond de rainure de la deuxième rainure virtuelle (G2), et un fond de rainure de la troisième rainure virtuelle (G3), alors

la profondeur de rainure de chaque rainure circonférentielle dans une plage allant de 90 % à 110 % de la distance (Ld) depuis la surface radialement extérieure de la portion formant bande de roulement (2b) jusqu'à la ligne virtuelle (VL) à la position axiale de chacune desdites rainures circonférentielles,

dans lequel

la profondeur de rainure d1 de la première rainure virtuelle (G1),

la profondeur de rainure d2 de la deuxième rainure virtuelle (G2), et

la profondeur de rainure d3 de la troisième rainure virtuelle (G3) sont déterminées sur la base des équations (2) à (4) suivantes :

$$d1 = (L1 \times d0) / \{L1 + \alpha(LC-L1)\} \text{ --- (2)}$$

$$d2 = (L2 \times d0) / \{L2 + \alpha(LC-L2)\} \text{ --- (3)}$$

$$d3 = (L3 \times d0) / \{L3 + \alpha(LC-L3)\} \text{ --- (4)}$$

où

d0 est la profondeur de rainure de la rainure virtuelle de référence (G0), LC est la longueur de contact au sol de couronne,

L1 est une première longueur de contact au sol à la première position axiale (P1),

L2 est une deuxième longueur de contact au sol à la deuxième position axiale (P2), et

L3 est une troisième longueur de contact au sol à la troisième position axiale (P3), dans lequel les longueurs de contact au sol LC, L1, L2 et L3 sont mesurées quand le pneumatique monté sur une jante normale et gonflé à une pression interne normale est mis en contact avec une surface plate horizontale sous un angle de cambrure de 0 degré et est chargé avec une charge normale.

2. Pneumatique (1) selon la revendication 1, dans lequel le coefficient de correction $\alpha$ est dans une plage allant de 0,8 à 1,2.

3. Pneumatique (1) selon la revendication 1 ou 2, dans lequel les rainures incluent des rainures latérales (5) qui s'étendent dans la direction axiale du pneumatique.

FIG.1

FIG.2

FIG.3

EP 4 015 244 B1

# FIG.4

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2019182339 A
- US 6443199 B1
- JP 2009078790 A
- EP 3173254 A1
- EP 2527163 A1
- EP 3689642 A1